# FASCICULE DE BREVET EUROPEEN

(11) **EP 0 828 950 B1**
(45) Date de publication et mention de la délivrance du brevet: **01.12.1999**
(21) Numéro de dépôt: 96919875.3
(22) Date de dépôt: 07.05.1996
(51) Int. Cl.: F16B 35/04

(54) **VIS A MISE EN PLACE ET RETRAIT RAPIDES, SON PROCEDE DE FABRICATION ET OUTIL POUR SON RETRAIT**
SCHRAUBE ZUR SCHNELLEN MONTIERUNG UND DEMONTIERUNG, VERFAHREN ZUR IHRER HERSTELLUNG UND WERKZEUG ZU IHRER DEMONTIERUNG
SCREW SET IN PLACE AND REMOVED RAPIDLY, ITS FABRICATION PROCESS AND TOOL FOR ITS REMOVAL

(30) Priorité: 11.05.1995 FR 9505600
(43) Date de publication de la demande: 18.03.1998
(73) Titulaire: SIDEL S.A., 76053 Le Havre Cédex (FR)
(72) Inventeur: SAINT MARTIN, Rodolphe, F-76053 Le Havre Cédex (FR)
(74) Mandataire: Siloret, Patrick
(86) Numéro de dépôt international: FR9600688
(87) Numéro de publication internationale: WO9635883

(56) Documents cités:
- DE-A- 1 700 102
- US-A- 2 087 114

## Description

L'invention concerne une vis destinée à être mise en place et retirée rapidement. Elle concerne également un procédé de fabrication d'une telle vis et un outil pour son retrait.

Elle s'applique à toutes les vis destinées à assurer une fixation ou un assemblage en étant mises en place dans un trou taraudé dans une pièce complémentaire. Ainsi, c'est le cas, par exemple, des vis destinées à coopérer avec un écrou, comme celle décrite dans le document FR 2 352 203 A, ou de celles destinées à assurer la fixation d'au moins deux pièces entre elles en les vissant dans les filets d'un trou taraudé ménagé dans la masse d'au moins l'une de ces pièces.

Un inconvénient de ces vis connues est que leur mise en place et leur retrait sont des opérations qui peuvent être relativement longues et fastidieuses.

En effet, la mise en place d'une vis nécessite les opérations suivantes, dans cet ordre: 1) engagement des filets de la vis dans le taraudage de la pièce complémentaire; 2) rotation de la vis jusqu'à mise en appui de la tête de vis sur l'une des pièces; 3) serrage en effectuant un certain nombre de tours ou de portions de tours à partir de la mise en appui.

Son retrait, quant à lui, nécessite les opérations suivantes: 1) desserrage; 2) rotation de la vis pour dégager ses filets du taraudage de la pièce complémentaire; 3) retrait proprement dit.

Ce sont en fait les phases de rotation (opérations 2 lors de la mise en place ou du retrait ci-avant) qui sont les plus longues. Ceci peut être gênant quand les vis sont, par exemple, destinées à assurer la fixation de pièces de personnalisation sur une machine-outil. Il convient en effet que, dans ce cas, l'immobilisation de la machine, nécessitée par le changement de ces pièces, soit la plus courte possible, pour en réduire les coûts d'exploitation et ne pas trop en diminuer la capacité de production.

On connaît des dispositifs qui permettent d'assurer une fixation ou un démontage en peu de temps. Mais ces dispositifs connus offrent généralement une moindre qualité de fixation: soit ils sont très sensibles aux vibrations, soit ils ont une résistance mécanique moindre.

Ainsi, on connaît, par exemple, des dispositifs de verrouillage du type quart de tour ou à baïonnette dans lesquels un ergot porté par une tige de fixation est engagé et bloqué, suite à une légère rotation, dans un mécanisme à fente et came de blocage d'une autre pièce.

Ces dispositifs présentent une certaine élasticité qui les rendent impropres à la fixation de pièces soumises à des vibrations, par exemple.

L'invention a donc pour objet un dispositif qui, tout en pouvant être mis en place et retiré rapidement, ne présente pas les inconvénients des dispositifs connus.

Selon l'invention, une vis, comportant un corps cylindrique et des filets à la périphérie du corps, est caractérisée en ce que les filets sont agencés pour pouvoir prendre deux positions: une première dans laquelle ils font saillie à la périphérie et une seconde dans laquelle ils sont effacés dans l'épaisseur du corps, et en ce qu'elle comporte des moyens de déplacement des filets d'une position à l'autre et des moyens de blocage des filets dans leur position en saillie.

L'invention permet donc de conserver les avantages des vis et de s'affranchir de leurs inconvénients en supprimant les phases de rotation longues et fastidieuses lors de l'insertion ou du retrait de la vis: 1) en mode insertion, les filets sont effacés, ce qui permet d'enfoncer la vis jusqu'à mise en appui de la tête de vis sans avoir à effectuer une rotation; après appui, il suffit de placer les filets dans leur position en saillie, et de procéder alors à l'opération de serrage en effectuant quelques portions de tour seulement; 2) en mode retrait, il suffit de desserrer la vis, puis d'effacer les filets pour pouvoir la retirer sans avoir, là encore, à effectuer de rotation.

Selon une autre caractéristique, les moyens de déplacement des filets sont combinés avec leurs moyens de blocage.

Selon une autre caractéristique, les filets sont réalisés sur des secteurs mobiles selon un sens radial par rapport au corps, et les positions d'effacement ou en saillie des filets par rapport au corps sont déterminées par la position des secteurs dans ce dernier.

Selon une autre caractéristique, la vis est agencée pour que la position dans laquelle les filets sont en saillie soit stable. Ainsi, la vis ne peut pas se retirer ou se desserrer inopinément.

Un procédé de réalisation de la vis selon l'invention est caractérisé en ce que les filets sont usinés sur les secteurs après que ces derniers aient été mis en place dans le corps et aient été bloqués dans la position en saillie.

Ainsi, il n'y a pas à prévoir un outillage spécifique pour usiner les filets: un outil de taraudage usuel suffit, par exemple.

Un autre avantage d'un usinage des secteurs après mise en place est le suivant: selon le pas et le profil des filets, la disposition relative des portions de filets peut ne pas être la même sur tous les secteurs. En conséquence, un usinage des secteurs préalable à leur montage risquerait d'imposer, d'une part un réglage différent de l'outil d'usinage pour chaque secteur et, d'autre part, un marquage ou un repérage des secteurs pour les monter ensuite en position relative correcte dans le corps. L'usinage après mise en place évite donc ces contraintes de réglage et de repérage, et permet de réduire le coût de réalisation d'une telle vis.

Selon une autre caractéristique, un outil pour manipuler la vis avant son serrage ou après son desserrage, est caractérisé en ce qu'il comporte des moyens pour saisir la vis et agir sur les moyens de déplacement des filets et leurs moyens de blocage en saillie, afin de les débloquer et faire passer les filets dans leur position effacée.

D'autres caractéristiques et avantages de l'invention apparaîtront à la lecture de la description des figures ci-après, sur lesquelles:
- la figure 1 est une vue en coupe partielle longitudinale d'un mode préféré de réalisation d'une vis selon l'invention, avec les secteurs dans la position en saillie des filets, après usinage de ces derniers;
- la figure 2 est une vue en coupe selon 2-2 de la figure 1;
- la figure 3 est une vue en coupe partielle longitudinale de la vis illustrée sur la figure 1, avec les secteurs dans la position effacée des filets, après usinage de ces derniers;
- la figure 4 est une vue en coupe selon 4-4 de la figure 3;
- la figure 5 est une vue dite de dessus d'un secteur, en fait de sa face portant les portions de filets;
- la figure 6 est une vue de côté d'un secteur;
- la figure 7 est une vue d'extrémité d'un secteur;
- la figure 8 est une vue extérieure de la vis, avant usinage des filets sur les secteurs, lorsque ces derniers sont en saillie;
- la figure 9 est une vue extérieure de la vis, avant usinage des filets sur les secteurs, lorsque ces derniers sont dans leur position effacée;
- les figures 10 à 12 illustrent un outillage pour la mise en place et/ou le retrait de la vis, et la façon de l'utiliser.

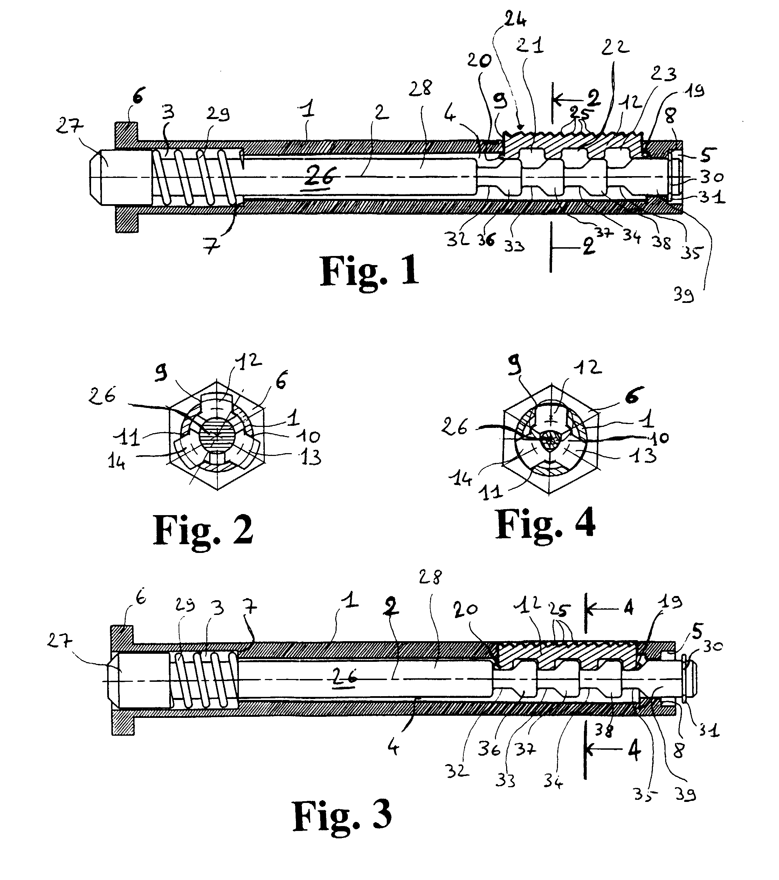

La vis illustrée sur les figures 1 à 4 comprend un corps 1 (représenté en coupe longitudinale sur les figures 1 et 3) formé par un tube cylindrique traversé sur toute sa longueur par un trou centré sur son axe longitudinal 2. Dans l'exemple illustré, le trou est constitué de trois tronçons 3, 4, 5 cylindriques concentriques visibles sur les figures 1 et 3.

Une première extrémité du corps 1 est pourvue d'une tête polygonale 6 pour le serrage ou le desserrage de la vis, comme il sera expliqué ultérieurement.

Un premier tronçon 3 du trou traversant le tube, d'une part débouche sur cette première extrémité du tube 1 et, d'autre part, communique avec un second tronçon 4. Le diamètre du premier tronçon est supérieur à celui du second.

Le second tronçon 4, quant à lui, communique par ailleurs, avec le troisième 5 qui débouche sur la seconde extrémité du corps 1. Le diamètre du troisième tronçon est supérieur à celui du second.

La différence de diamètre à la jonction entre le premier 3 et le second 4 tronçon entraîne la présence d'une butée annulaire 7 à cette jonction.

De même, en raison de la différence de diamètre entre le second 4 et le troisième 5 tronçon, une autre butée annulaire 8 est présente à la jonction entre ces deux tronçons.

Dans le mode de réalisation illustré, trois ouvertures 9, 10, 11, régulièrement réparties à la périphérie du corps 1, c'est-à-dire à 120° l'une de l'autre, sont ménagées de façon à déboucher dans le second tronçon 4, à proximité de la jonction entre ce tronçon 4 et le troisième 5. Une seule ouverture 9 est visible sur les figures 1 et 3; par contre elles sont toutes les trois visibles sur les figures 2 et 4.

Chaque ouverture est constituée par une fente allongée, orientée parallèlement à l'axe 2 du corps 1. Chaque ouverture est limitée, d'une part par deux grands bords plans, parallèles entre eux, et, d'autre part, par deux petits bords arrondis, opposés l'un à l'autre, et formant les deux extrémités de la fente.

En outre, chaque ouverture est disposée de façon à posséder un plan de symétrie longitudinal orienté dans un sens radial par rapport au corps 1.

Ainsi, les deux grands bords de chaque ouverture sont non seulement parallèles entre eux, mais encore parallèles à ce plan de symétrie longitudinal.

Enfin, les deux bords arrondis de chaque ouverture sont identiques entre eux, et possèdent, dans toute l'épaisseur de l'ouverture, un rayon de courbure constant.

De telles ouvertures peuvent être facilement obtenues par fraisage, à l'aide d'une fraise cylindrique. L'axe de rotation de la fraise est déplacé pendant l'opération de fraisage dans le plan de symétrie radial de l'ouverture, tout en étant maintenu constamment perpendiculairement à l'axe du corps.

C'est donc le diamètre de la fraise qui détermine, d'une part, l'espacement entre les deux bords plans de l'ouverture, et, d'autre part, le rayon de courbure des bords arrondis formant les extrémités des ouvertures.

Dans chaque ouverture 9, 10, 11, est disposé un secteur, respectivement 12, 13, 14, mobile dans des directions radiales par rapport au corps 1, c'est-à-dire pouvant se rapprocher ou s'écarter de l'axe longitudinal du corps. Dans l'exemple illustré par les figures, chaque secteur est en forme de barrette.

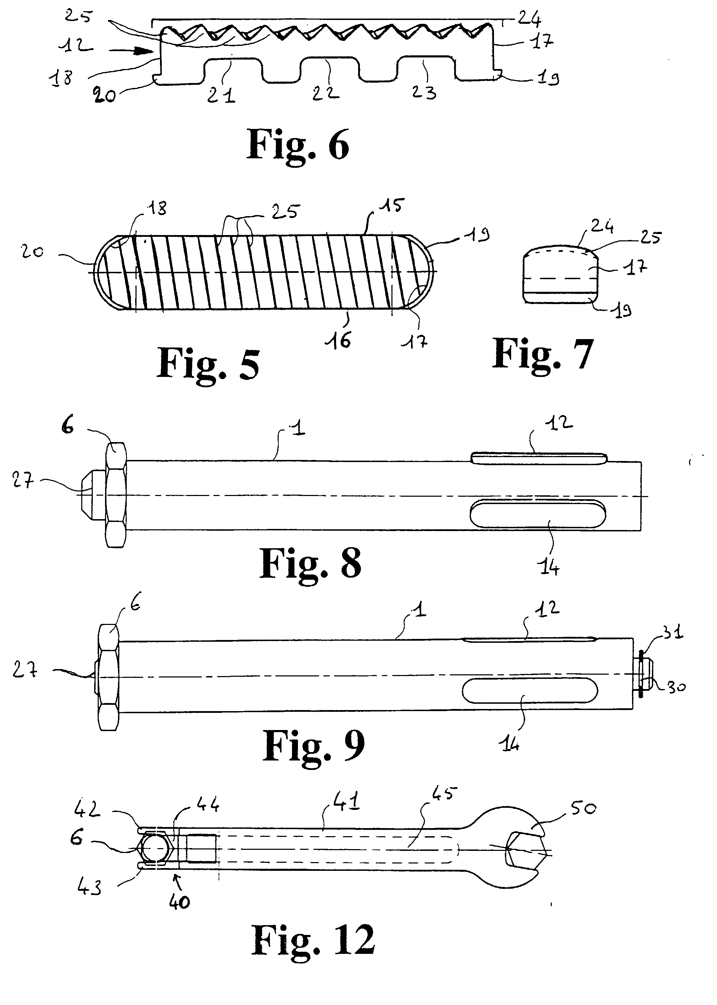

Les détails de réalisation d'un secteur conforme à ceux présents sur les figures 1 à 4 sont représentés sur les figures 5, 6 et 7.

Vu de dessus, c'est-à-dire côté filets, (figure 5) chaque secteur possède une forme adaptée pour pouvoir être introduit dans une ouverture et se déplacer librement, dans des directions radiales par rapport au corps.

Pour cela, chaque secteur possède une partie centrale allongée, limitée par deux parois planes 15, 16, parallèles entre elles, et par deux extrémités demi-cylindriques 17, 18. La longueur de la partie centrale est égale à celle des grands bords des ouvertures 9, 10, 11, ménagées dans le corps 1.

Le rayon de courbure des extrémités demi-cylindriques 17, 18 est sensiblement inférieur à celui des bords arrondis des ouvertures. En conséquence, la largeur d'un secteur, c'est-à-dire l'espacement entre ses parois planes 15, 16, est sensiblement inférieure à la distance séparant les bords plans des ouvertures. Ce sont ces différences dimensionnelles qui permettent le déplacement radial d'un secteur, sans coincement, dans une ouverture.

Afin d'éviter qu'un secteur, lorsqu'il se trouve dans une ouverture, puisse s'échapper vers l'extérieur du corps 1 de vis, des moyens sont prévus pour limiter le déplacement radial des secteurs de l'intérieur vers l'extérieur du corps.

Dans le mode de réalisation préféré, illustré par les figures 5 à 7, ces moyens sont constitués par deux butées 19, 20, chacune en forme de portion d'anneau, entourant au moins partiellement, l'une 19, la partie basse d'une extrémité 17 demi-cylindrique, et l'autre 20, la partie basse de l'extrémité 18 demi-cylindrique opposée. Par ailleurs, le rayon de courbure extérieur de chaque butée est supérieur au rayon de courbure des extrémités arrondies de chaque ouverture. En conséquence, les dimensions des secteurs, au niveau des butées, sont supérieures à celles des ouvertures, ce qui empêche leur retrait accidentel et leur perte lorsqu'ils sont en place dans les ouvertures (les secteurs étant disposés dans les ouvertures de façon que les butées soient à l'intérieur du trou réalisé dans le corps 1).

Comme il est visible sur la figure 6, la paroi dite inférieure d'un secteur (celle se trouvant à l'intérieur du corps de vis lorsque le secteur est en place) est pourvue de créneaux 21, 22, 23, réalisés dans le sens de la largeur du secteur. Le rôle des créneaux et des parties pleines bordant chaque créneau sera expliqué ultérieurement.

Comme le montrent les figures 5 et 6, des portions 25 de filets sont réalisées sur la paroi dite supérieure 24 de chaque secteur, c'est-à dire sa paroi opposée à celle portant les créneaux 21, 22, 23. En conséquence, comme visible sur la figure 7, qui est une vue d'extrémité d'un secteur, cette paroi supérieure 24 est arrondie.

Comme visible sur la figure 5, chacune des portions 25 de filets est disposée obliquement par rapport à la largeur, c'est-à-dire la dimension comprise entre les deux parois latérales 15, 16, d'un secteur, et joint donc une paroi latérale 15 à l'autre 16.

L'espacement entre les portions 25 de filets, et leur angle par rapport aux parois latérales 15, 16 est fonction du pas et du diamètre de la vis.

Comme il sera expliqué ultérieurement plus en détail, de préférence, les portions de filets sont usinées après la mise en place des secteurs dans les ouvertures 9, 10, 11 du corps de la vis. De préférence, pour faciliter cet usinage, la paroi supérieure 24 de chaque secteur est arrondie avant usinage. Dans ce cas, le rayon de courbure avant usinage est constant sur toute la longueur de cette paroi, et correspond au rayon extérieur final de la vis. Ainsi, si la vis doit avoir un diamètre de 10 mm, le rayon de courbure de la paroi supérieure 24 des secteurs est de 5 mm avant usinage des filets.

Comme visible sur les figures 1 à 4 notamment, une tige 26 est disposée à l'intérieur du trou en trois tronçons 3, 4, 5 réalisé dans le corps.

La longueur totale de la tige 26 est légèrement supérieure à celle du corps 1. La tige comporte deux portions cylindriques concentriques: une première 27 dont le diamètre est légèrement inférieur à celui du premier tronçon 3 du trou, mais néanmoins supérieur à celui du second tronçon 4; une seconde 28, dont le diamètre est légèrement inférieur à celui du second tronçon 4.

L'extrémité libre de la première portion 27 constitue une première extrémité de la tige; l'extrémité libre de la seconde portion 28 en constitue une seconde.

Un ressort spiral 29, de diamètre extérieur respectivement inférieur à celui du premier tronçon 3 et supérieur à celui du second tronçon 4, est placé dans le premier tronçon 3. Les dimensions du ressort sont donc telles que sa course dans le trou est limitée par la butée 7 présente à la jonction entre le premier 3 et le second 4 tronçon: il ne peut pas passer du premier 3 dans le second 4 tronçon.

Par ailleurs, le diamètre intérieur du ressort est respectivement supérieur à celui de la seconde portion 28 de la tige 26, de sorte que cette portion peut librement coulisser dans le ressort, et inférieur à celui de la première portion 27 de la tige 26. Lorsque la tige 26 est en place dans le corps 1, le ressort 29, d'une part, entoure une partie de la seconde 28 portion de la tige 26, et, d'autre part, est comprimé entre la butée 7 (présente entre le premier 3 et le second 4 tronçon) et la première portion 27 de la tige, comme visible sur les figures 1 et 3.

A proximité de la seconde extrémité de la tige 26, c'est-à-dire de l'extrémité libre du second tronçon, autour de celle-ci, est ménagé un évidement annulaire 30, qui reçoit un anneau croissant 31.

Le diamètre extérieur de l'anneau est respectivement inférieur au diamètre du troisième tronçon 5 et supérieur à celui du second tronçon 4; ainsi, lorsque la tige 26, les secteurs 12, 13, 14, et le ressort 29 sont en place dans le corps 1, et que l'anneau lui-même est en place dans l'évidement annulaire 30, la tige ne peut plus ressortir, l'anneau venant en appui contre la butée 8 présente à la jonction entre le second et le troisième tronçon (figure 1).

Comme ceci est visible sur la figure 1, la longueur de la tige 26 est telle que lorsque l'anneau 31 est au contact de la butée 8 à la jonction entre le second 4 et le troisième 5 tronçon, une partie de la première portion 27 de la tige 26 sort du corps 1, du côté de la tête 6 de la vis.

Comme il sera expliqué plus en détail, cette partie est employée par l'utilisateur de la vis pour pousser la tige, afin d'amener les filets en position effacée dans le corps, l'action antagoniste du ressort les ramenant dans la position en saillie.

Des évidements annulaires 32, 33, 34, 35 sont ménagés sur la seconde portion 28 de la tige, dans une zone de celle-ci en regard des secteurs. Le nombre d'évidements, leur écartement et leur largeur, correspondent respectivement au nombre, à l'écartement et à la largeur des parties pleines bordant les créneaux 21, 22, 23 ménagés dans les secteurs. Par ailleurs, la profondeur des évidements correspond sensiblement à celle des créneaux.

Deux évidements successifs sont séparés par une excroissance annulaire dont le diamètre extérieur correspond à celui du reste de la seconde portion 28 de tige. Il y a donc autant d'excroissances annulaires 36, 37, 38 que de créneaux sur un secteur.

Chaque excroissance annulaire, dont la largeur totale correspond à celle d'un créneau, comporte deux parties distinctes, une cylindrique et une inclinée, tronconique dans le mode de réalisation illustré sur les figures 1 et 3.

La partie tronconique de chaque excroissance 36, 37, 38 est plus proche de la première portion 27 de la tige 26 (celle sur laquelle le ressort 23 vient en appui) que la partie cylindrique respective.

En outre, la jonction entre une partie cylindrique et la partie tronconique correspondante s'effectue à la base de cette dernière, sans transition abrupte, le diamètre de la base du tronc de cône étant égal à celui de la partie cylindrique correspondante.

Par ailleurs, la jonction entre une partie tronconique et l'évidement annulaire adjacent s'effectue au sommet d'un tronc de cône. Le diamètre du sommet du tronc de cône est égal au diamètre de cet évidement, de sorte qu'il n'existe pas de transition abrupte entre le tronc de cône et l'évidement annulaire.

Enfin, la jonction entre l'évidement annulaire 35 le plus proche de la seconde extrémité de la tige 26 (celle qui porte l'anneau croissant 31) et la partie cylindrique 39 de la tige 26 aboutissant à cette seconde extrémité, s'effectue également par l'intermédiaire d'une partie tronconique concentrique, dont le sommet est au plan de jonction avec l'évidement annulaire 35, et dont la base est au plan de jonction avec la partie cylindrique 39.

Le pas entre deux évidements annulaires successifs est égal à celui entre deux parties pleines délimitant un créneau 22, 23, 24, sur un secteur. Par ailleurs, la largeur de chaque évidement annulaire est égale ou légèrement supérieure à celle de chacune desdites parties pleines.

De même, d'une part le pas entre les parties cylindriques de deux excroissances annulaires successives, d'autre part le pas entre la partie cylindrique de l'excroissance annulaire 38 la plus proche de la partie cylindrique 39 de la tige aboutissant à sa seconde extrémité et cette partie cylindrique elle-même, et enfin, en conséquence, le pas entre deux parties coniques successives, sont tous égaux à celui entre deux parties pleines délimitant un créneau 22, 23, 24.

Enfin, la disposition des excroissances annulaires sur la tige est telle que, lorsque l'anneau croissant 31 est en appui contre la butée 8 présente à la jonction entre le second et le troisième 5 tronçon du trou, d'une part une partie pleine d'extrémité d'un secteur repose sur la partie cylindrique 39 de la tige aboutissant à sa seconde extrémité, et, d'autre part, les autres parties pleines reposent chacune sur une des parties cylindriques des excroissances annulaires 36, 37, 38, comme le montre la figure 1; par ailleurs, lorsque la tige est repoussée, les parties pleines se trouvent en regard des évidements annulaires, les créneaux 22, 23, 24 chevauchant alors les excroissances annulaires, comme illustré par la figure 3.

Ainsi, lorsque les parties pleines délimitant les créneaux sont en appui sur les excroissances annulaires 36, 37, 38 et sur la partie 39 d'extrémité de la tige 26, les secteurs sont repoussés vers l'extérieur du corps 1 de la vis, de sorte que leur paroi supérieure 12, et donc les filets 25, après usinage, sont en saillie à l'extérieur du corps, comme visible sur les figures 1 et 2.

Lorsque les parties pleines délimitant les créneaux sont en regard des évidements annulaires 32, 33, 34, 35, les secteurs peuvent se rapprocher radialement de l'axe du corps, et les filets 25 ménagés dans leur paroi supérieure peuvent s'effacer dans la masse du corps 1, comme visible sur les figures 3 et 4.

On notera que, pour ne pas surcharger les figures 1 à 4, soit seulement certaines pièces constitutives de la vis ont été représentées en coupe, soit certaines pièces au travers desquelles passe un plan de coupe n'ont pas été hachurées, ce qui ne nuit en rien à la compréhension de ces figures. Ainsi, sur les figures 1 et 3, seulement le corps 1 et le secteur 12 sont en coupe, alors que la tige 26, le ressort 29 et l'anneau croissant 31 sont représentés en vue de côté; sur les figures 2 et 4, seulement le corps 1 et la tige 26 sont hachurés, pas les secteurs 12, 13, 14, bien que les plans de coupe respectifs de ces figures 2 et 4 passent au travers de ces derniers.

L'effacement des filets 25 est provoqué par un appui de l'utilisateur sur la portion 27 de tige faisant saillie du côté de la tête 6 de vis. Le positionnement et le blocage en saillie de ces mêmes filets s'effectue de façon automatique, en relâchant cette portion 27. Suite à ce relâchement, le ressort 29 repousse la tige 26; les parties pleines délimitant les créneaux glissent alors sur les portions tronconiques et reprennent position sur les excroissances annulaires et sur la partie 39 de la tige proche de la seconde extrémité.

Lorsque la tige a terminé sa course sous l'action du ressort, l'anneau croissant 31 se trouvant alors en appui contre la butée 8 entre le second 4 et le troisième 5 tronçon du trou, les secteurs sont donc bloqués dans la position en saillie des filets.

L'utilisation de la vis est la suivante.

Pour sa mise en place, l'utilisateur appuie sur la portion 27 de la tige, ce qui provoque l'effacement des filets (figures 3 et 4), puis tout en maintenant l'appui, il enfonce la vis jusqu'à sa mise en butée. Dès que la vis est en butée, l'utilisateur relâche son appui, ce qui provoque la sortie des filets (figures 1 et 2). Il lui suffit alors seulement de procéder au serrage de la vis au couple prescrit. L'utilisateur n'a donc plus à effectuer la rotation de la vis, souvent sur un grand nombre de tours, entre son engagement dans la pièce complémentaire et l'arrivée en butée.

Pour le retrait, il suffit que l'utilisateur débloque la vis à l'aide d'une clé ou d'un outil adapté à la tête 6, puis retire simplement la vis, en provoquant l'effacement des filets par un appui sur la portion 27 de la tige. Il s'affranchit donc de tous les tours entre le desserrage et la sortie complète de la vis.

Comme évoqué auparavant, l'assemblage de la vis s'effectue de préférence en utilisant des secteurs sur lesquels les portions de filets 25 ne sont pas usinées. L'usinage des filets s'effectue après que toutes les pièces constitutives (tige, ressort, secteurs, anneau croissant) ont été mises en place respective dans le corps 1. Les figures 8 et 9 illustrent un tel ensemble: la figure 8 lorsque les secteurs sont en saillie et la figure 9 lorsqu'ils sont effacés.

On rappelle que cette façon d'agir évite des erreurs dans la mise en place des secteurs et réduit les coûts de fabrication des vis conformes à l'invention. En effet, au départ, tous les secteurs sont identiques, mais après usinage, la disposition relative des portions de filets 25 peut différer d'un secteur à l'autre: ceci dépend du pas des filets.

Par ailleurs, cette façon d'agir évite l'emploi d'un outillage spécifique: un outillage classique de réalisation des filets tel qu'un tour ou une filière suffit.

La réalisation des filets s'effectue bien entendu lorsque les secteurs sont en saillie (position illustrée par la figure 8). Après usinage des secteurs, on aboutit donc à la vis telle qu'illustrée sur les figures 1 et 2.

Il est bien entendu que l'invention n'est nullement limitée au mode de réalisation décrit.

En particulier, le nombre des secteurs pourrait être différent de trois. Il est néanmoins préférable qu'au moins deux secteurs soient présents et qu'ils soient régulièrement disposés à la périphérie du corps pour que les contraintes de serrage soient régulièrement réparties à la périphérie du corps et sur la tige. Ainsi, lorsque deux secteurs sont présents, il est préférable qu'ils soient diamétralement opposés; lorsque trois secteurs sont présents, il est préférable qu'ils soient à 120° l'un de l'autre. En d'autres termes, si n secteurs sont présents, l'angle préféré entre deux secteurs adjacents est de 360°/n.

Par ailleurs, au lieu d'une tête polygonale, la vis pourrait comporter une tête d'une autre forme.

De même, la présence d'un trou avec des tronçons cylindriques dans le corps et celle d'une tige de section cylindrique ne sont pas fondamentales. De telles formes cylindriques ont l'avantage d'être faciles à usiner.

En outre, dans le cas d'une tige de section cylindrique, il n'est pas essentiel que les excroissances annulaires comportent chacune une partie tronconique. Ce qui est important est la présence de moyens complémentaires sur la tige 26 et/ou sur les secteurs 12, 13, 14, telles que des tronçons inclinés ou incurvés, permettant que les parties pleines délimitant les créneaux puissent passer du fond des évidements annulaires au-dessus des parties cylindriques des excroissances sous l'action mécanique de la tige, lorsque celle-ci est repoussée dans sa position stable par le ressort 29. Ainsi, des tronçons inclinés ou incurvés pourraient être présents sur la tige 26 à la place de chaque partie tronconique. On peut aussi envisager des variantes dans lesquelles lesdits moyens, tels que des tronçons inclinés ou incurvés, soient réalisés sur les secteurs eux-mêmes: chaque créneau serait par exemple relié à l'une des parties pleines qui le délimite par un tronçon incliné ou incurvé. On peut encore envisager la présence de tronçons inclinés ou incurvés à la fois sur la tige et sur les secteurs.

Par ailleurs, on pourrait envisager une variante dans laquelle la tige, au lieu d'être poussée pour permettre l'effacement des secteurs, serait tirée. Ceci supposerait néanmoins que la tige dispose de moyens de préhension, et compliquerait sensiblement son usinage, augmentant de ce fait le coût de la vis.

Enfin, l'ensemble évidement 30 - anneau croissant 31 pourrait être remplacé par des moyens équivalents, tels qu'une clavette ou autre.

D'autres modifications à la portée de l'homme du métier sont envisageables et doivent être considérées comme contenues dans la présente demande.

La vis selon l'invention peut facilement être mise en place sans outillage spécifique. En effet, il suffit que l'utilisateur appuie sur la portion 27 de la tige, en saillie près de la tête 6, pour insérer la vis et qu'il la bloque ensuite avec une clé ou un outil adapté.

Par contre, bien que son retrait, sans outillage spécifique, soit possible, il est néanmoins préférable d'en prévoir un. En effet, pour retirer la vis, après desserrage, il faut d'une part appuyer sur la portion 27 en saillie près de la tête 6 afin de dégager les filets vers l'intérieur du corps, et d'autre part tirer en même temps sur la tête, pour extraire la vis. Ces deux actions sont donc antagonistes, ce qui peut rendre l'opération de retrait délicate dans certains cas.

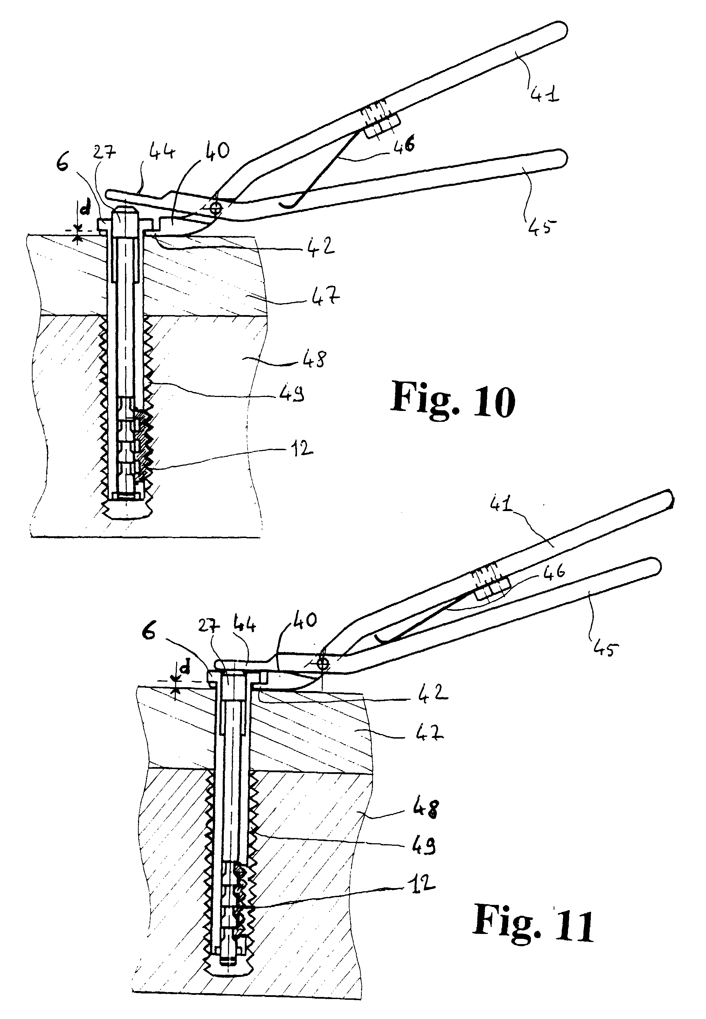

Les figures 10 à 12 illustrent un outillage spécifique pour réaliser ces opérations.

L'outillage est constitué par une pince dont une mâchoire 40 placée à une extrémité d'un premier bras 41 est pourvue de deux doigts 42, 43 parallèles (visibles sur la figure 12), écartés d'une distance au moins équivalente au diamètre extérieur du corps 1. L'autre mâchoire 44, à une extrémité d'un second bras 45 articulé au premier, est plate.

De préférence, un ressort 46 permet d'écarter les deux bras, donc les deux mâchoires 40, 44, lorsque l'utilisateur laisse la pince au repos.

Les figures 10 et 11 illustrent la façon dont l'outil peut être utilisé pour retirer un vis assurant le serrage d'une première pièce 47 entre la tête 6 de vis et une seconde pièce 48, cette dernière au moins étant pourvue d'un trou taraudé 49. L'utilisateur doit d'abord débloquer la vis et lui faire effectuer un nombre limité de tours ou de portions de tours, suffisant pour écarter la tête 6 et la pièce 47 sur laquelle la vis est fixée, d'une distance d, au moins égale à l'épaisseur des doigts 42, 43. Il lui suffit alors de glisser les doigts 42, 43 sous la tête, de part et d'autre du corps (figure 10), puis (figure 11) de rapprocher les deux mâchoires l'une de l'autre, à l'aide des bras 41, 45 de manipulation de la pince. La mâchoire 44 plate vient alors appuyer sur la portion de tige 27 en saillie près de la tête 6, permettant le retrait, dans le corps 1 de la vis, des secteurs (dont l'un 12 est visible sur les figures 10 et 11) et, en conséquence, le dégagement des filets 25 par rapport au filetage du trou taraudé 49. En maintenant la pince serrée, il devient alors possible de retirer la vis sans difficulté.

Bien entendu, cette pince peut également être utilisée pour la mise en place de la vis.

Dans un mode de réalisation préféré de la pince, illustré sur la figure 12, l'un des bras 41 porte à son autre extrémité un organe 50 de forme et dimensions adaptées pour permettre le serrage ou le desserrage de la vis. Ainsi, pour des vis à tête hexagonale, l'organe serait par exemple une clé plate adaptée aux dimensions de la tête.

Comme il résulte de ce qui précède, l'invention ne se limite nullement aux modes de réalisation décrits. Elle en embrasse toutes les variantes à la portée de l'homme du métier.

## Revendications

1. Vis comportant un corps cylindrique (1) et des filets (25) à la périphérie du corps, caractérisée en ce que les filets sont agencés pour pouvoir prendre deux positions: une première dans laquelle ils font saillie à la périphérie et une seconde dans laquelle ils sont effacés dans l'épaisseur du corps, et en ce qu'elle comporte des moyens de déplacement (12;13;14;26,27,29;32,33,34,35) des filets d'une position à l'autre, et des moyens de blocage (29;36,37,38) des filets dans leur position en saillie.

2. Vis selon la revendication 1, caractérisée en ce que les moyens de déplacement des filets sont combinés avec leurs moyens de blocage dans leur position en saillie.

3. Vis selon l'une des revendications 1 ou 2 précédentes, caractérisée en ce qu'elle est agencée pour que la position dans laquelle les filets sont en saillie soit stable.

4. Vis selon l'une des revendications 1 à 3 précédentes, caractérisée en ce qu'elle comporte au moins un secteur (12,13,14) mobile radialement par rapport au corps, en ce que les filets (25) sont réalisés sur une paroi de ce ou ces secteur(s), et en ce que les positions d'effacement ou en saillie des filets par rapport au corps sont déterminées par la position de ce ou ces secteur(s) dans ce dernier.

5. Vis selon la revendication 4, caractérisée en ce que le corps (1) est traversé par un trou (3,4,5) longitudinal, de sorte que ledit corps (1) forme un tube; en ce qu'au moins une ouverture (9,10,11) traverse la paroi du tube et en ce qu'un secteur (12,13,14) respectif est disposé dans cette ou ces ouverture(s); et en ce qu'une tige (26) actionnable par l'utilisateur de la vis est disposée dans le trou; et en ce que la tige et le (ou les) secteur(s) sont pourvus de moyens complémentaires (32,...,38;21,22,23) interagissant entre eux, soit pour mettre le ou les secteur(s) en saillie, soit pour le ou les mettre en position effacée, selon l'action de l'utilisateur.

6. Vis selon la revendication 5, caractérisée en ce que la tige (26) est déplaçable axialement dans le trou.

7. Vis selon les revendications 3 et 6, caractérisée en ce que des moyens de rappel tels qu'un ressort (29) sont disposés dans le corps (1) et interagissent entre le corps (1) et la tige (26) de façon à ce que, lorsqu'aucune action n'est exercée pour l'utilisateur, la tige soit rappelée dans une position telle que les secteurs (12,13,14) sont en saillie.

8. Vis selon l'une des revendications 5 à 7, caractérisée en ce que les moyens complémentaires, de la tige (26) et du ou des secteur(s) (12,13,14), interagissant pour mettre le ou les secteurs soit en saillie, soit en position effacée, sont constitués respectivement, sur la tige, par une alternance d'évidements (32,33,34,35) et d'excroissances (36,37,38) annulaires et, sur chaque secteur, par une alternance de parties pleines et de créneaux (21,22,23) disposés sur une face de chaque secteur opposée à celle (24) portant les filets (25); en ce que le pas entre deux évidements (32,33,34,35) annulaires successifs de la tige (26) est égal à celui entre deux parties pleines délimitant un créneau (21,22,23) de chaque secteur, de sorte que, selon la position axiale de la tige (26), chaque partie pleine d'un secteur peut se trouver soit en regard d'un évidement annulaire respectif de la tige, et peut donc descendre au fond de cet évidement, permettant l'effacement de chaque secteur et donc des filets (25) que chacun porte, soit sur une excroissance annulaire respective, provoquant la saillie de chaque secteur et donc des filets que chacun porte.

9. Vis selon la revendication 8, caractérisée en ce que chaque excroissance annulaire de la tige (26) comporte deux parties: une partie cylindrique et une partie inclinée, telle qu'une partie conique ou une partie incurvée; la partie cylindrique constitue la zone de l'excroissance annulaire sur laquelle est placée une partie pleine d'un secteur lorsqu'il est en saillie, et la partie inclinée assure la jonction entre ladite partie cylindrique et l'évidement annulaire adjacent en regard duquel se trouve ladite partie pleine du secteur lorsqu'il est effacé.

10. Vis selon l'une des revendications 8 ou 9, caractérisée en ce que chaque créneau est relié à l'une des parties pleines qui le délimite par un tronçon incliné.

11. Vis selon l'une des revendications 8 à 10 précédentes, caractérisée en ce que la largeur des évidements annulaires de la tige est égale ou légèrement supérieure à celle des parties pleines entre deux créneaux d'un secteur.

12. Vis selon l'une des revendications 5 à 11, caractérisée en ce que chaque ouverture (9,10,11) du corps (1) possède un plan de symétrie longitudinal orienté dans son sens radial par rapport au corps (1), et possède deux grands bords parallèles entre eux et audit plan de symétrie, en ce que chaque secteur possède une forme adaptée pour pouvoir être introduit dans une ouverture et s'y déplacer dans un sens radial par rapport au corps (1) et en ce que des moyens (19,20) sont prévus pour limiter le déplacement radial des secteurs de l'intérieur vers l'extérieur du corps, et empêcher ainsi leur retrait.

13. Vis selon la revendication 12, caractérisée en ce que les moyens (19,20) pour limiter le déplacement des secteurs sont des butées.

14. Vis selon l'une des revendications 5 à 13 précédentes, caractérisée en ce qu'une extrémité du corps (1) est pourvue d'une tête (6) de manipulation pour son serrage ou son desserrage, et en ce que la tige possède une portion (27) dépassant du corps au niveau de cette extrémité au moins lorsque les secteurs sont en saillie, permettant son actionnement par l'utilisateur.

15. Vis selon la revendication 14, lorsqu'elle dépend de l'une des revendications 7 à 13, caractérisée en ce que la tige est actionnable en exerçant une poussée sur ladite portion (27) vers la tête provoquant son enfoncement, et les moyens de rappel, tel le ressort (29), exercent une poussée antagoniste, faisant ressortir ladite portion (27) de tige lorsque l'utilisateur cesse son action.

16. Vis selon la revendication 15, caractérisée en ce que le mouvement de la tige sous l'action de l'utilisateur et/ou sous l'action des moyens de rappel est limité par des moyens tels des butées (7, 8).

17. Procédé de réalisation d'une vis selon l'une des revendications 1 à 16 précédentes, caractérisé en qu'il consiste à usiner les filets (25), après que toutes les pièces de la vis aient été mises en place dans le corps (1).

18. Procédé selon la revendication 17, lorsqu'elle dépend de l'une des revendications 4 à 16, caractérisé en ce que l'usinage des filets est réalisé en plaçant les secteurs dans leur position en saillie.

19. Outil pour le retrait et/ou la mise en place d'une vis selon l'une des revendications 15 à 16, caractérisé en ce qu'il est constitué par une pince avec des doigts (42,43) pour supporter la vis sous sa tête (6) et par une mâchoire (44) provoquant l'enfoncement de la tige lorsque la pince est serrée, entraînant l'effacement des filets.

20. Outil selon la revendication 19, caractérisé en ce qu'il comporte un bras (41) avec, à l'une de ses extrémités, un organe (50) adapté à la forme et aux dimensions de la tête (6), pour permettre le serrage et/ou le desserrage de la vis.

## Patentansprüche

1. Schraube, die einen zylindrischen Körper (1) und auf dessen Umfang ein Gewinde (25) umfaßt, **dadurch gekennzeichnet, daß** das Gewinde derart angeordnet ist, daß es zwei Positionen einnehmen kann: eine erste, in welcher es über den Umfang vorsteht, und eine zweite, in welcher es in der Dicke des Körpers versenkt ist, **und daß** sie Mittel (12; 13; 14; 26, 27, 29; 32, 33, 34, 35) zur Bewegung des Gewindes von einer Position in die andere und Mittel (29; 36, 37, 38) zur Arretierung des Gewindes in der vorstehenden Position enthält.

2. Schraube nach Anspruch 1, **dadurch gekennzeichnet, daß** die Mittel zur Bewegung des Gewindes mit den Mitteln zur Arretierung in der vorstehenden Position kombiniert sind.

3. Schraube nach Anspruch 1 oder 2, **dadurch gekennzeichnet, daß** sie angetrieben wird, damit die Position, in welcher das Gewinde vorsteht, stabil ist.

4. Schraube nach einem der Ansprüche 1 bis 3, **dadurch gekennzeichnet, daß** sie mindestens einen in bezug auf den Körper radial beweglichen Sektor (12, 13, 14) enthält, **daß** das Gewinde (25) auf einer Wand des/der Sektors/Sektoren ausgeführt ist, und daß die versenkte oder vorstehende Position des Gewindes in bezug auf den Körper von der Position dieses/dieser Sektors/Sektoren in ihm bestimmt wird.

5. Schraube nach Anspruch 4, **dadurch gekennzeichnet, daß** durch den Körper (1) derart ein Längsloch (3, 4, 5) führt, daß der Körper (1) eine Röhre bildet, **daß** mindestens eine Öffnung (9, 10, 11) durch die Wand der Röhre geht, **daß** in der/den Öffnung/en jeweils ein Sektor (12, 13, 14) angeordnet ist, **daß** in dem Loch ein vom Anwender der Schraube betätigbarer Stab (26) angeordnet ist, und daß der Stab und der/die Sektor/en mit miteinander wechselwirkenden komplementären Mitteln (32, ..., 38; 21, 22, 23) versehen sind, um entsprechend der Einwirkung des Anwenders den/die Sektor/en entweder in vorstehende oder in versenkte Position zu bringen.

6. Schraube nach Anspruch 5, **dadurch gekennzeichnet, daß** der Stab (26) in dem Loch axial beweglich ist.

7. Schraube nach den Ansprüchen 3 und 6, **dadurch gekennzeichnet, daß** im Körper (1) Rückstellmittel wie eine Feder (29) angeordnet sind und zwischen dem Körper (1) und dem Stab (26) derart wechselwirken, daß, wenn vom Anwender nicht eingewirkt wird, der Stab in eine solche Position zurückgestellt wird, daß die Sektoren (12, 13, 14) vorstehen.

8. Schraube nach einem der Ansprüche 5 bis 7, **dadurch gekennzeichnet, daß** die komplementären Mittel des Stabes (26) und des/der Sektors/Sektoren (12, 13, 14), welche wechselwirken, um den/die Sektor/en entweder in vorstehende oder versenkte Position zu bringen, auf dem Stab abwechselnd aus ringförmigen Vertiefungen (32, 33, 34, 35) und Vorsprüngen (36, 37, 38) bzw. auf jedem Sektor abwechselnd aus vollen Teilen und Aussparungen (21, 22, 23), welche auf einer Seite jedes Sektors angeordnet sind, die der (24) gegenüberliegt, die das Gewinde (25) trägt, bestehen, und daß der Gewindegang zwischen zwei aufeinanderfolgenden ringförmigen Vertiefungen (32, 33, 34, 35) des Stabes (26) gleich dem zwischen zwei vollen Teilen ist, die eine Aussparung (21, 22, 23) jedes Sektors begrenzen, so daß gemäß der axialen Position des Stabes (26) jeder volle Teil eines Sektors sich entweder gegenüber der jeweiligen ringförmigen Vertiefung des Stabes befinden und sich damit zum Boden dieser Vertiefung senken kann, was die Versenkung des jeweiligen Sektors und damit des Gewindes (25), das jeder trägt, erlaubt, oder auf dem jeweiligen ringförmigen Vorsprung befinden kann, was das Vorstehen jedes Sektors und damit des Gewindes, das jeder trägt, bewirkt.

9. Schraube nach Anspruch 8, **dadurch gekennzeichnet, daß** jeder ringförmige Vorsprung des Stabes (26) zwei Teile umfaßt: einen zylindrischen Teil und einen abfallenden Teil wie einen kegelförmigen oder einen gekrümmten Teil, wobei der zylindrische Teil die Zone des ringförmigen Vorsprungs bildet, auf welcher ein voller Teil eines Sektors angeordnet wird, wenn dieser vorsteht, und der abfallende Teil die Verbindung zwischen zylindrischem Teil und angrenzender ringförmiger Vertiefung sicherstellt, welcher gegenüber sich der volle Teil des Sektors befindet, wenn dieser versenkt ist.

10. Schraube nach Anspruch 8 oder 9, **dadurch gekennzeichnet, daß** jede Aussparung mit einem der vollen Teile verbunden ist, der sie durch einen schrägen Kegelstumpf begrenzt.

11. Schraube nach einem der Ansprüche 8 bis 10, **dadurch gekennzeichnet, daß** die Breite der ringförmigen Vertiefungen des Stabes gleich oder etwas größer als die der vollen Teile zwischen zwei Aussparungen eines Sektors ist.

12. Schraube nach einem der Ansprüche 5 bis 11, **dadurch gekennzeichnet, daß** jede Öffnung (9, 10, 11) des Körpers (1) eine Längssymmetrieebene, die in ihrer radialen Richtung in bezug auf den Körper (1) orientiert ist, und zwei große Ränder, die zueinander und zur Symmetrieebene parallel sind, besitzt, **und daß** jeder Sektor eine angepaßte Form besitzt, um in eine Öffnung hineingesteckt und darin in einer in bezug auf den Körper (1) radialen Richtung bewegt werden zu können, **und daß** Mittel (19, 20) vorgesehen sind, um die radiale Bewegung der Sektoren vom Inneren zum Äußeren des Körpers zu begrenzen und so deren Zurückziehen zu verhindern.

13. Schraube nach Anspruch 12, **dadurch gekennzeichnet, daß** die Mittel (19, 20) zur Begrenzung der Bewegung der Sektoren Anschläge sind.

14. Schraube nach einem der Ansprüche 5 bis 13, **dadurch gekennzeichnet, daß** ein Ende des Körpers (1) mit einem Arbeitskopf (6) zum Festschrauben oder Lösen versehen ist, **und daß** der Stab einen Abschnitt (27) besitzt, der vom Körper an diesem Ende wenigstens übersteht, wenn die Sektoren vorstehen, wodurch seine Betätigung durch den Anwender möglich wird.

15. Schraube nach Anspruch 14, wenn er von einem der Ansprüche 7 bis 13 abhängig ist, **dadurch gekennzeichnet, daß** der Stab zu betätigen ist, indem in Richtung des Kopfes auf den Abschnitt (27) Druck ausgeübt wird, wodurch dessen Hineindrücken bewirkt wird, und die Rückstellmittel wie die Feder (29) einen entgegengesetzt wirkenden Druck ausüben, wodurch der Abschnitt (27) des Stabes, wenn der Anwender mit der Einwirkung aufhört, wieder herausspringt.

16. Schraube nach Anspruch 15, **dadurch gekennzeichnet, daß** die Bewegung des Stabes durch Einwirkung des Anwenders und/oder der Rückstellmittel durch Mittel wie Anschläge (7, 8) begrenzt wird.

17. Verfahren zur Herstellung einer Schraube nach einem der Ansprüche 1 bis 16, **dadurch gekennzeichnet, daß** es darin besteht, das Gewinde (25) maschinell zu bearbeiten, nachdem alle Bauteile der Schraube im Körper (1) angeordnet worden sind.

18. Verfahren nach Anspruch 17, wenn er von einem der Ansprüche 4 bis 16 abhängig ist, **dadurch gekennzeichnet, daß** die maschinelle Bearbeitung des Gewindes durchgeführt wird, wobei die Sektoren in vorstehende Position gebracht worden sind.

19. Werkzeug für das Entfernen und/oder Anbringen einer Schraube nach Anspruch 15 oder 16, **dadurch gekennzeichnet, daß** es aus einer Zange mit Fingern (42, 43), um die Schraube unter ihrem Kopf (6) zu unterstützen, und aus einer Klemmbacke (44) besteht, die das Hineindrücken des Stabes bewirkt, wenn die Zange angezogen wird, wodurch das Gewinde versenkt wird.

20. Werkzeug nach Anspruch 19, **dadurch gekennzeichnet, daß** es einen Arm (41) mit an einem Ende einem Mittel (50) enthält, das an Form und Abmessungen des Kopfes (6) angepaßt ist, um das Festziehen und/oder Lösen der Schraube zu ermöglichen.

## Claims

1. Bolt comprising a cylindrical body (1) and threads (25) at the periphery of the body, characterised in that the threads are designed so that they can assume two positions: a first position in which they project at the periphery and a second position in which they are retracted in the thickness of the body, and in that it comprises means (12;13;14;26,27,29;32,33,34,35) of displacing the threads from one position to the other, and means (29;36,37,38) of locking the threads in their projecting position.

2. Bolt according to claim 1, characterised in that the means of displacing the threads are combined with the means of locking them in their projecting position.

3. Bolt according to either of the preceding claims 1 or 2, characterised in that it is designed so that the position in which the threads are projecting is stable.

4. Bolt according to one of the preceding claims 1 to 3, characterised in that it comprises at least one sector (12,13,14) radially mobile in relation to the body, in that the threads (25) are made on a wall of the said sector(s), and in that the retracted or projecting positions of the threads in relation to the body are determined by the position of the said sector(s) in the latter.

5. Bolt according to claim 4, characterised in that the body (1) has a longitudinal hole (3,4,5) passing through it, such that the said body (1) forms a tube; in that at least one opening (9,10,11) passes through the wall of the tube and in that a respective sector (12,13,14) is arranged in the said opening(s); and in that a rod (26), operatable by the user of the bolt is arranged in the hole; and in that the rod and the sector(s) are provided with additional means (32, ..., 38; 21,22,23) interacting with one another so as to either make the sector(s) project or to place it/them in the retracted position, according to the action of the user.

6. Bolt according to claim 5, characterised in that the rod (26) is axially displaceable in the hole.

7. Bolt according to claims 3 and 6, characterised in that means of return such as a spring (29) are arranged in the body (1) and interact between the body (1) and the rod (26) in such a way that, when no action is exerted by the user, the rod is returned to a position such that the sectors (12,13,14) project.

8. Bolt according to one of claims 5 to 7, characterised in that the additional means of the rod (26) and of the sector(s) (12,13,14), interacting to make the sector(s) either project or to place it/them in a retracted position are formed respectively on the rod by alternating annular recesses (32,33, 34,35) and protuberances (36,37,38) and on each sector by alternating webs and gaps (21,22,23) arranged on one face of each sector opposite that (24) carrying the threads (25); in that the pitch between two successive annular recesses (32,33,34,35) of the rod (26) is equal to that between two webs defining a gap (21,22,23) of each sector such that, depending on the axial position of the rod (26), each web of a sector may lie either opposite a respective annular recess of the rod and can therefore descend to the bottom of the said gap, allowing each sector and hence the threads (25) that each sector carries to be retracted, or on a respective annular protuberance, causing each sector and hence the threads that each sector carries to project.

9. Bolt according to claim 8, characterised in that each annular protuberance of the rod (26) comprises two sections: a cylindrical section and an inclined section, such as a conical section or a dished section, the cylindrical section forming the area of the annular protuberance on which a web of a sector is located when it is projecting, and the inclined section providing the junction between the said cylindrical section and the adjacent annular recess, opposite which the said web of the sector is situated when it is retracted.

10. Bolt according to either of claims 8 or 9, characterised in that each gap is linked to one of the webs defining it by an inclined section.

11. Bolt according to one of the preceding claims 8 to 10, characterised in that the width of the annular recesses of the rod is equal to or slightly greater than that of the webs between two gaps of a sector.

12. Bolt according to one of claims 5 to 11, characterised in that each opening (9,10,11) of the body (1) has a longitudinal plane of symmetry oriented radially in relation to the body (1) and has two parallel long edges between them and to the said plane of symmetry, in that each sector has a shape allowing it to be introduced into an opening and to be displaced radially in relation to the body (1), and in that means (19,20) are provided to limit the radial displacement of the sectors from the inside to the outside of the body, thereby preventing them from being withdrawn.

13. Bolt according to claim 12, characterised in that the means (19,20) of limiting the displacement of the sectors are stops.

14. Bolt according to one of the preceding claims 5 to 13, characterised in that one end of the body (1) is provided with a handling head (6) for screwing or unscrewing, and in that the rod has a part (27) extending beyond the body at this end at least when the sectors are projecting, allowing it to be operated by the user.

15. Bolt according to claim 14, where it is dependent on one of claims 7 to 13, characterised in that the rod can be operated by applying a thrust to the said part (27) towards the head, driving it in, and the means of return, such as the spring (29), exert a counter-thrust causing the said part (27) of the rod to come back out when the user ceases to operate it.

16. Bolt according to claim 15, characterised in that the movement of the rod under the action of the user and/or under the action of the means of return is limited by means such as stops (7, 8).

17. Process for the manufacture of a bolt according to one of the preceding claims 1 to 16, characterised in that it consists of machining the threads (25) once all the parts of the bolt have been inserted in the body (1).

18. Process according to claim 17, where it is dependent on one of claims 4 to 16, characterised in that machining of the threads is performed by placing the sectors in their projecting position.

19. Tool for the withdrawal and/or insertion of a bolt according to one of claims 15 to 16, characterised in that it comprises pliers with fingers (42,43) for supporting the bolt under its head (6) and a jaw (44) causing the pin to be driven in when the pliers are clamped, thereby retracting the threads.

20. Tool according to claim 19, characterised in that it comprises an arm (41) with, at one of its ends, an element (50) adapted to the shape and dimensions of the head (6), in order to permit screwing and/or unscrewing of the bolt.
